# FASCICULE DE BREVET EUROPEEN

(11) **EP 2 680 379 B1**
(45) Date de publication et mention de la délivrance du brevet: **22.09.2021**
(21) Numéro de dépôt: 13305511.1
(22) Date de dépôt: 19.04.2013
(51) Int. Cl.: H02B 1/052, H01H 71/08, H01H 83/22

(54) **ENSEMBLE D'APPAREILS ÉLECTRIQUES MODULAIRES AVEC DISPOSITIF DE VERROUILLAGE SUR UN RAIL DE MONTAGE**
KOMBINATION AUS MODULAREN SCHALTGERÄTE MIT VERRIEGELUNGSVORRICHTUNG AUF EINER MONTAGESCHIENE
ASSEMBLY OF MODULAR ELECTRIC SWITCHGEAR APPARATUSES WITH DEVICE FOR LOCKING THEM ON A MOUNTING RAIL

(30) Priorité: 28.06.2012 FR 1256148
(43) Date de publication de la demande: 01.01.2014
(73) Titulaire: Schneider Electric Industries SAS, 92500 Rueil-Malmaison (FR)
(72) Inventeur: Hannequin, Pascal, 38050 Grenoble Cedex 09 (FR); Duchemin, Jean-Pierre, 38050 Grenoble Cedex 09 (FR)
(74) Mandataire: Colette, Marie-Françoise

(56) Documents cités:
- EP-A1- 0 717 425
- EP-A2- 0 806 784
- EP-B1- 1 000 430
- ES-A2- 2 076 075
- FR-A1- 2 837 617
- None

## Description

### DOMAINE TECHNIQUE

La présente invention concerne un ensemble d'appareils électriques modulaires selon le préambule de la revendication 1.

### ETAT DE LA TECHNIQUE

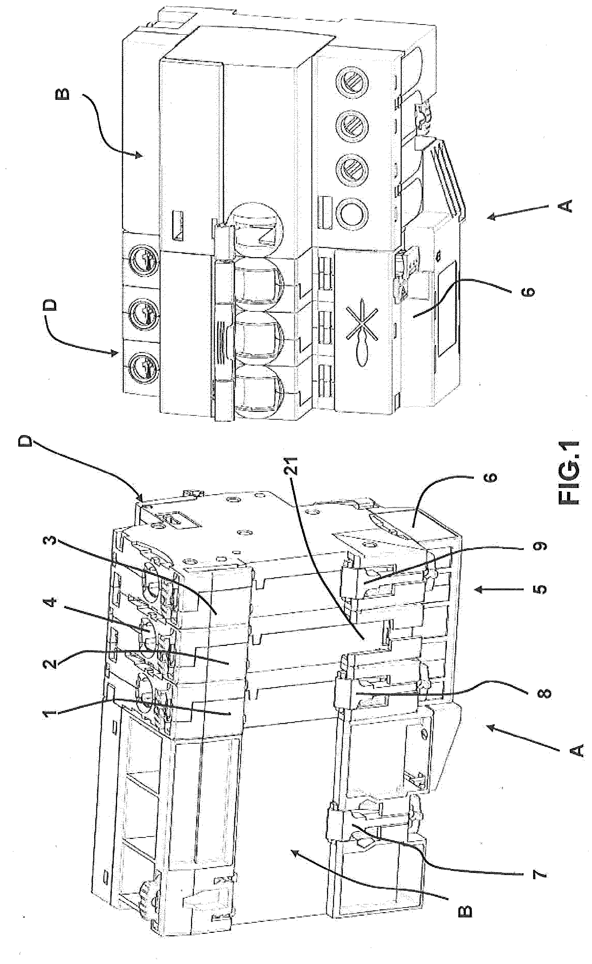

Dans le système de protection illustré sur la figure 1, un appareil de protection électrique est, de manière connue en soi, logé dans un boîtier de forme sensiblement parallélépipédique et destiné à être monté sur un rail de montage. Deux faces opposées du boîtier situées de part et d'autre du rail, comportent respectivement des bornes d'entrée et des bornes de sortie pour un raccordement au circuit électrique à protéger. Chaque borne est usuellement du type à cage et comprend un orifice, sensiblement rectangulaire et de dimensions connues, débouchant sur une face du disjoncteur, dans lequel est accessible une plage sensiblement plane de raccordement qui s'étend le long d'une surface interne de l'orifice. Usuellement, un passage prévu sur la paroi opposée à la plage, classiquement sur la paroi frontale du disjoncteur, permet l'accès à une vis laquelle peut serrer orthogonalement un conducteur inséré dans l'orifice sur la plage pour assurer un raccordement électrique fiable.

Cet appareil de protection peut être associé à d'autres appareillages, comme un bloc de déclenchement différentiel, également logés dans un boîtier de forme similaire à l'appareil de protection et destinés à être montés sur le rail de montage à ses côtés pour y être couplés électriquement et mécaniquement. Le raccordement électrique des deux modules est réalisé par l'intermédiaire de conducteurs faisant saillie du boîtier du bloc différentiel pour être raccordés électriquement aux bornes de sortie du disjoncteur. Avant montage définitif sur le rail, deux faces appartenant respectivement au disjoncteur et au bloc sont accolées l'une à l'autre, puis des organes d'accouplement sont mis en œuvre pour une solidarisation et un couplage mécanique avant de réaliser le raccordement électrique des deux appareils borne par borne.

Pour améliorer et accélérer le processus de montage, les documents EP 0 806 784 ou EP 1 000 430 décrivent un bloc différentiel comportant un support destiné à loger les conducteurs de l'appareil différentiel et s'étendant en regard des bornes du disjoncteur ; le support et les conducteurs sont mobiles par rapport au boîtier du bloc différentiel, perpendiculairement au rail, entre une première position dans laquelle le support est éloigné du boîtier du disjoncteur et les conducteurs non engagés dans les bornes du disjoncteurs, et une seconde position dans laquelle le support est rapproché du boîtier du disjoncteur et les conducteurs insérés dans les bornes de sortie du disjoncteur.

Selon une autre réalisation connue, le support est fixe par rapport au boîtier du bloc différentiel et les conducteurs à l'intérieur du support sont mobiles par rapport au support.

Ces appareils modulaires sont montés sur le rail de support, de manière connue en soi, par l'intermédiaire d'un évidement prévu dans la face arrière des appareils et destiné à recevoir le rail, ledit rail comportant un premier bord longitudinal coopérant avec une butée fixe appartenant au boîtier de chaque appareil et un second bord longitudinal coopérant avec un ou plusieurs verrous montés à l'intérieur du boîtier de chaque appareil.

Chaque verrou comporte une partie coulissant à l'intérieur du boîtier et comportant à l'une de ses extrémités, un élément apte à coopérer avec le rail, et à son extrémité opposée, un élément de préhension apte à être manœuvrée de manière à permettre l'actionnement du verrou.

Or, ces verrous sont destinés à être accessibles et donc manœuvrables à partir de la face avant des appareils, et lors de la présence d'un support tel que précédemment mentionné, ces verrous deviennent inaccessibles car ceux-ci sont cachés par ledit support.

Un problème similaire se pose également lors de l'association d'un appareil de coupure avec un auxiliaire de télécommande par exemple, car dans ce cas le déverrouillage ne peut être réalisé que par le bas, ce qui en présence d'un bloc différentiel est rendu impossible.

On connaît également le document EP 0 717 425 décrivant un dispositif de verrouillage selon le préambule de la revendication 1, ce dispositif faisant partie intégrante d'un capot de protection de bornes.

La présente invention résout ce problème et propose un dispositif de verrouillage d'au moins un appareil modulaire sur un support de montage permettant d'identifier la présence du (des) verrou(s) et rendant la partie de manœuvre de ce verrou accessible pour sa manœuvre malgré la présence du support.

### EXPOSE DE L'INVENTION.

A cet effet, la présente invention a pour objet un ensemble d'appareils électriques modulaires selon la revendication 1.

Avantageusement, les branches de fixation s'étendent sur une longueur correspondant sensiblement à la moitié de la longueur des branches de guidage.

Selon une autre caractéristique, la branche de guidage comporte des moyens de retenue élastiques aptes à coopérer avec l'enveloppe de l'appareil de manière à retenir la branche de guidage à l'intérieur de l'enveloppe.

Avantageusement, ces moyens d'accrochage sur les verrous précités comportent des moyens pour réaliser un accrochage élastique sur lesdits verrous.

Selon une autre caractéristique, les moyens d'accrochage précités comportent des moyens d'accrochage coopérant avec une ouverture de manœuvre prévue dans la partie de manœuvre du (des) verrou (s).

Selon une autre caractéristique, lesdits appareils étant destinés à être montés sur un rail de montage en étant accolés par leurs faces latérales, ledit ensemble comportant au moins un appareil de coupure associé à un bloc différentiel ou un module de télécommande, ledit bloc différentiel ou module de télécommande comportant un support destiné à loger les conducteurs de liaison entre l'appareil de coupure et le bloc différentiel ou module de télécommande, ledit support étant situé en regard des bornes de sortie des appareils de coupure, cet ensemble est caractérisé en ce que la partie de manœuvre du dispositif de verrouillage fait saillie de la face d'extrémité principale du support située du côté des verrous, de manière à pouvoir être manœuvré par un utilisateur à partir de la face avant des appareils.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en perspective illustrant vue de l'arrière et vue de l'avant, un disjoncteur associé à un bloc différentiel selon l'art antérieur,
- Les figures 2 et 3 sont des vues en perspective respectivement de l'arrière et de l'avant, d'un disjoncteur tripolaire associé à un bloc déclencheur, avant le montage du prolongateur selon l'invention,
- Les figures 4 et 5 sont des vues identiques aux figures 2 et 3, après mise en place du prolongateur,
- Les figures 6 et 7 sont des vues en perspective respectivement de l'arrière et de l'avant, d'un disjoncteur tetrapolaire associé à un bloc différentiel, avant le montage du prolongateur selon l'invention,
- Les figures 8 et 9 sont des vues identiques aux figures 6 et 7 après le montage du prolongateur,
- Les figures 10 à 15a illustrent un prolongateur selon l'invention destiné à être utilisé sur un disjoncteur tetrapolaire ou tripolaire,

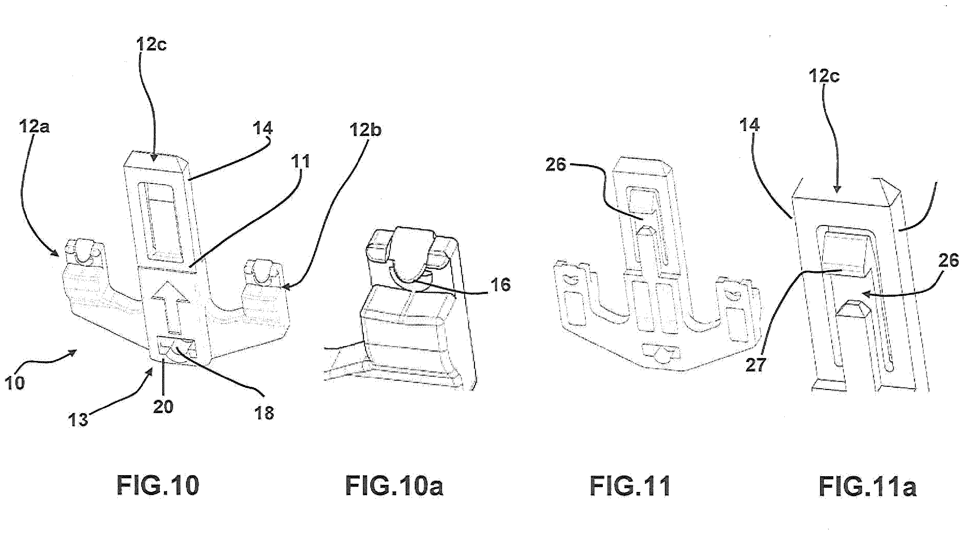

- Les figures 10 et 11 sont respectivement des vues de l'avant et de l'arrière dudit prolongateur et les figures 10a et 11a en sont des vues de détail,

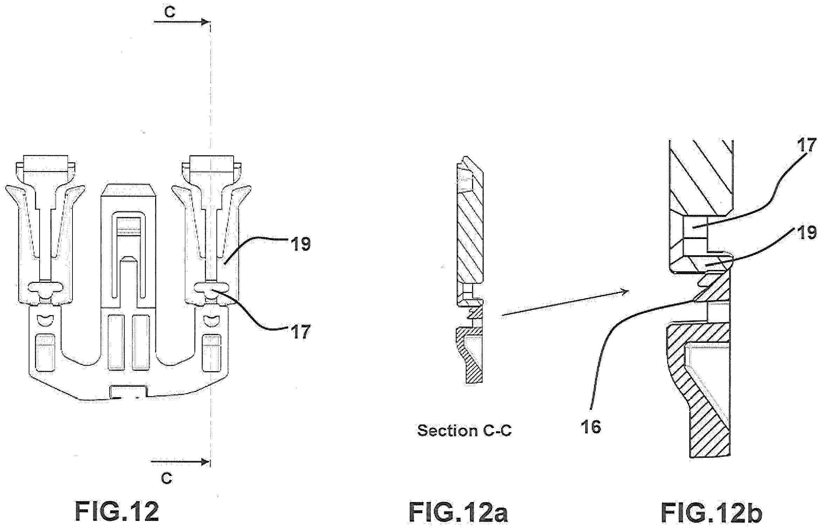

- Les figures 12 à 12b sont respectivement une vue de l'arrière, une vue en coupe, et une vue à échelle agrandie du prolongateur, au moment de son montage sur les verrous,

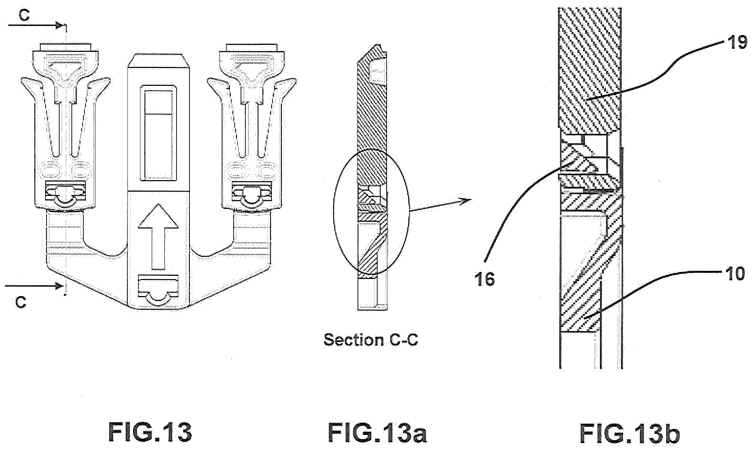

- Les figures 13 à 13b sont respectivement une vue de l'avant, une vue en coupe et une vue à échelle agrandie du même prolongateur en position accroché sur les verrous,

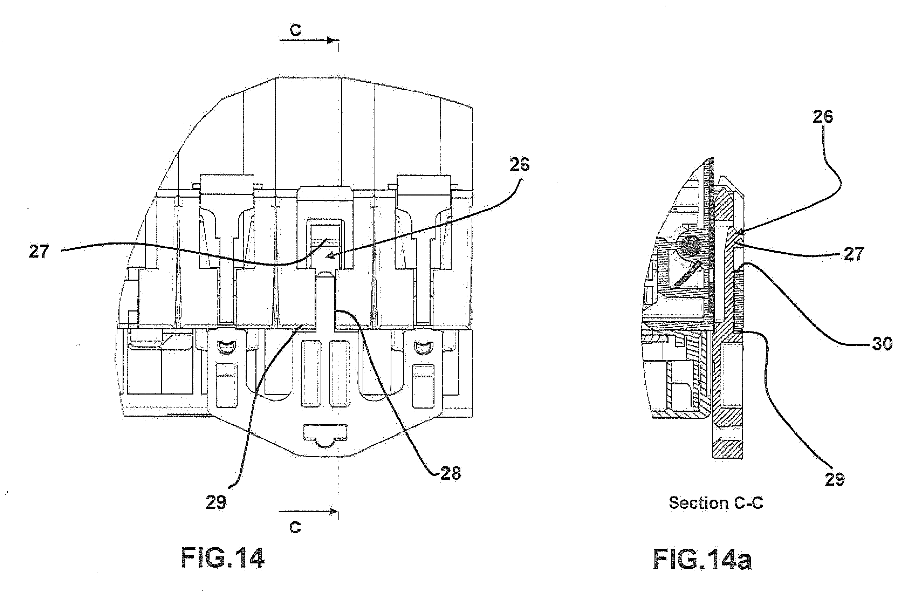

- La figure 14 est une vue partielle arrière d'un appareil, illustrant le prolongateur en position de verrouillage sur l'enveloppe de l'appareil, et la figure 14a en est une vue de détail,

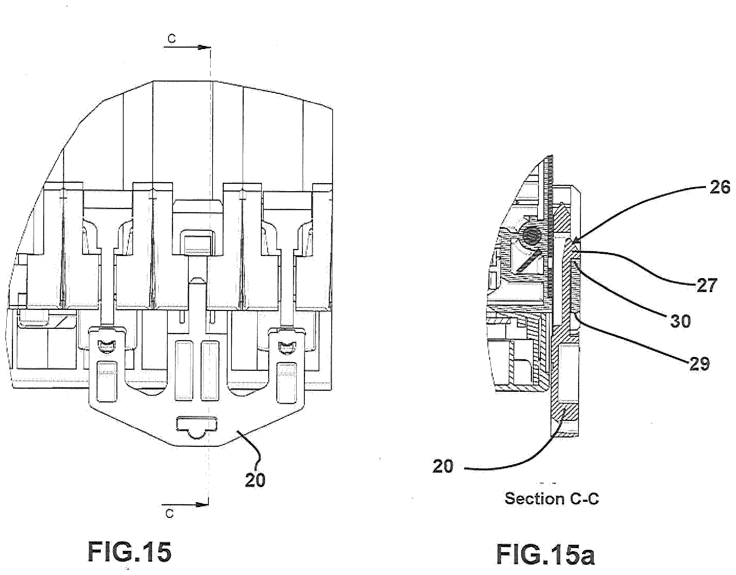

- Les figures 15 et 15a sont des vues identiques aux figures précédentes, en position déverrouillée du dispositif,

Sur la figure 1, on voit un appareillage de protection électrique A selon l'art antérieur constitué par l'association d'un disjoncteur tripolaire D comportant trois modules de coupure 1,2,3, et d'un bloc différentiel B, ces appareils formant un ensemble monobloc destiné à être monté sur un rail de support (non représenté), ledit rail pouvant être fixé par exemple dans une armoire électrique.

Ce disjoncteur tripolaire D est constitué par trois modules similaires 1,2,3 montés côte à côte sur le rail et solidarisés entre eux. Chaque module 1,2,3 est logé dans un boîtier et comporte de part et d'autre du rail, une borne de raccordement 4,5 des conducteurs du disjoncteur.

De manière connue en soi, le bloc différentiel B renferme un transformateur à noyau torique sur lequel sont bobinés des enroulements primaires reliés à chaque borne du bloc, localisée du même côté que les bornes de sortie du disjoncteur, et un enroulement secondaire connecté électriquement à un relai de déclenchement coopérant avec un mécanisme de commande du disjoncteur. Les enroulements primaires sont prolongés par des conducteurs primaires, formés par des fils rigides en cuivre, pour une connexion dans les bornes du disjoncteur par l'intermédiaire de conducteurs de liaison, logés dans un support 6 solidaire du boîtier du bloc différentiel B, ledit support 6 s'étendant en regard des bornes de sortie 5 du disjoncteur.

Cet appareillage de protection électrique est fixé sur le rail au moyen d'un dispositif de verrouillage comportant trois verrous 7, 8, 9 supportés pour l'un 7, par le bloc différentiel B, et pour les deux autres 8,9, par les deux modules d'extrémités 1,3 du disjoncteur D.

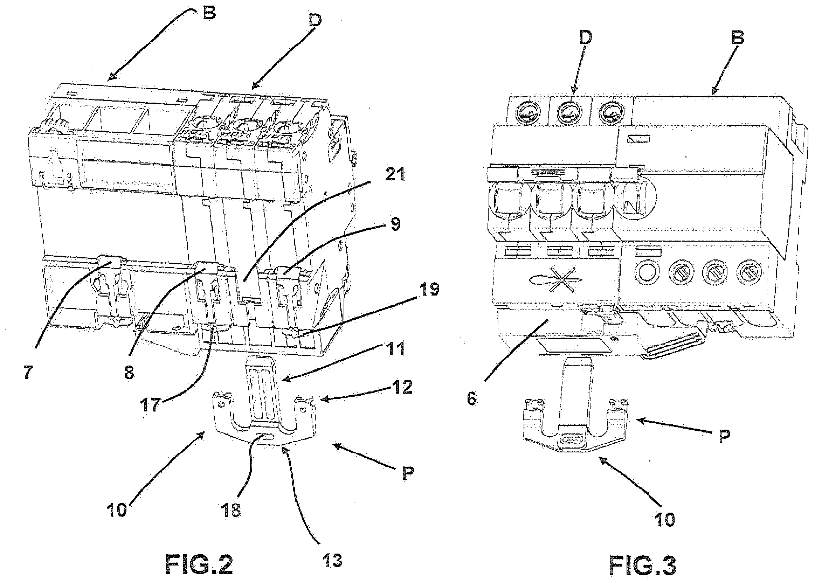

Sur les figures 2 à 5, cet appareillage est équipé d'un dispositif de verrouillage selon une réalisation particulière de l'invention, comportant un dispositif de prolongation P de la partie de manœuvre des verrous.

Tel que plus particulièrement illustré sur les figures 10 à 15a, ce dispositif de prolongation comporte une pièce 10 de forme sensiblement aplatie comportant une partie centrale 11 s'étendant sensiblement perpendiculairement à la direction longitudinale du rail et apte à être montée à coulissement dans l'enveloppe de l'appareillage au niveau du module central 2 du disjoncteur, une première partie d'extrémité 12 comportant deux branches dites premières 12a,12b de fixation et une branche 12c dite première de guidage, lesdites branches s'étendant dans la même direction que la partie centrale et sur une longueur d'environ la moitié de celle de la partie centrale, ainsi qu'une seconde partie d'extrémité 13 comportant une partie de manœuvre 20. Les moyens de guidage de ce dispositif de prolongation dans ladite enveloppe sont constitués sur les deux faces extérieures latérales 14,15 du bras de guidage 12c (fig.11 et 11a). Les deux bras dits premiers 12a, 12b comportent des moyens d'accrochage 16 plus particulièrement illustrés sur les figures 10 et 10a, destinés à coopérer avec l'ouverture 17 prévue dans la partie de manœuvre 19 des verrous 7,8,9. Ce dispositif de prolongation P comporte également au niveau de la partie centrale 11 dans la partie d'extrémité dite seconde 13, une ouverture oblongue 18 destinée à permettre la manœuvre dudit dispositif par exemple au moyen d'un tournevis, de la même manière que pour un verrou standard.

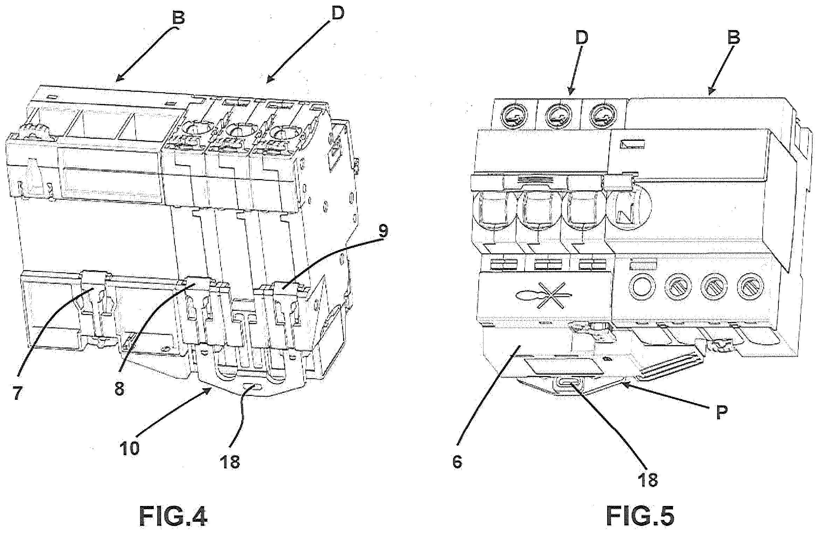

Sur les figures 2 et 3, le dispositif de prolongation P est amené en regard de l'orifice d'introduction 21 prévu à cet effet dans l'enveloppe au niveau du module central 2. Sur la figure 4, ce dispositif de prolongation P est introduit dans cet orifice 21, de telle manière que les moyens d'accrochage précités 16 coopèrent avec les ouvertures 17 des parties de manœuvre 19 des deux verrous 8,9, par encliquetage de ces éléments d'accrochage dans lesdites ouvertures 17.

Dans cette position du dispositif de prolongation P, l'ouverture de manœuvre 18 dudit dispositif de prolongation P se trouve en dessous du support 6, de sorte que cette ouverture 18 est accessible à partir de la face avant des appareils pour l'introduction d'un tournevis de manœuvre dudit dispositif.

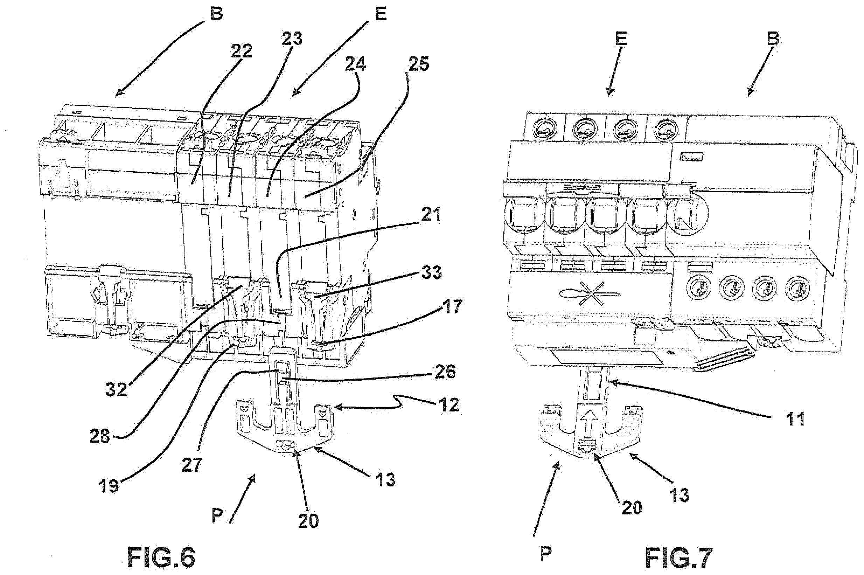

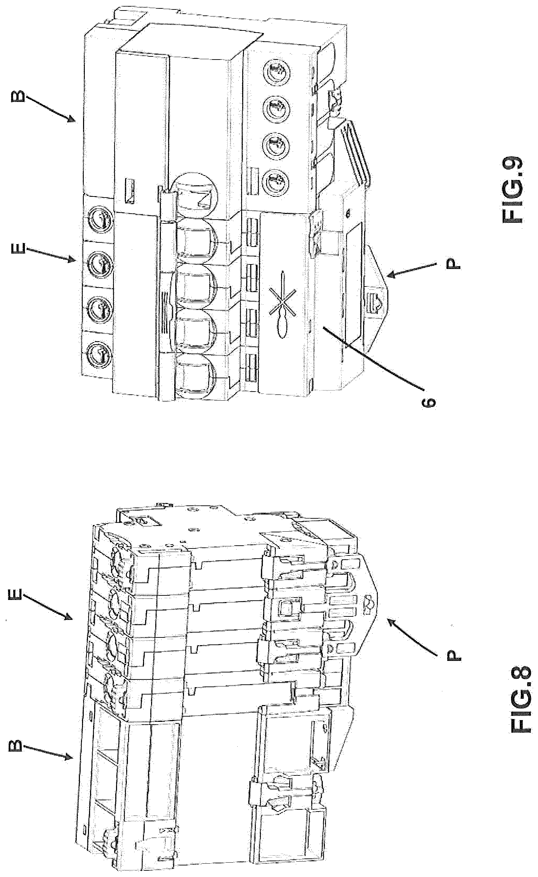

Tel qu'illustré sur les figures 6 à 9, ce dispositif de prolongation P peut également être utilisé sur un disjoncteur de type tétrapolaire E, comportant quatre modules juxtaposés 22, 23, 24,25 et dont deux modules 23,25 sont équipés chacun d'un verrou 32,33, ces deux modules 23,25 étant séparés par un module 24 ne comportant pas de verrou.

Selon cette réalisation préférée illustrée sur ces figures, le dispositif de prolongation P comporte, en plus des moyens de guidage 14, 15 et d'accrochage précités 16, des moyens de retenue 26 prévus sur la face de la pièce aplatie 10 opposée à celle comportant les moyens d'accrochage, ces moyens de retenue 26 étant constitués par un clip 27 prévu sur la partie centrale 11 destiné à coopérer avec un évidement 28 prévu dans une face en regard dudit clip et appartenant à l'enveloppe du disjoncteur. Ces moyens de retenue 26 sont particulièrement illustrés sur les figures 11, 11a, et 14 à 15a.

Les figures 14 et 14a illustrent le dispositif de verrouillage en position verrouillée, l'élément de retenue 26 du dispositif de prolongation P étant en butée sur une partie 29 de l'enveloppe, alors que les figures 15 et 15a illustrent le dispositif de verrouillage en position déverrouillée, l'élément de retenue 26 du dispositif étant en butée sur une autre partie 30 de l'enveloppe.

On notera que dans les versions tripolaire et tétrapolaire, l'élasticité des moyens d'accrochage est réalisée par les branches 12a, 12b et la languette 26, les éléments d'accrochage formés à l'extrémité des branches étant quant à eux rigides.

On a donc réalisé grâce à l'invention un ensemble d'appareils électriques modulaires sur un rail de montage comportant, pour l'un au moins des appareils, un dispositif de verrouillage permettant, même dans le cas où la partie de manœuvre des verrous n'est pas accessible car cachée par exemple par un support logeant les conducteurs de liaison, d'identifier la position de ces verrous et de les manœuvrer, un tel dispositif permettant également de les manœuvrer tous en même temps lorsqu'ils sont plusieurs, ces verrous pouvant être manœuvrés à la main ou au moyen de l'outil habituellement utilisé pour la manœuvre des verrous.

## Revendications

1. Ensemble d'appareils électriques modulaires destinés à être montés sur un rail de montage comportant pour l'un au moins des appareils, un dispositif de verrouillage, ledit dispositif comportant au moins un verrou comportant une pièce mobile apte à coulisser par rapport à l'enveloppe de l'appareil, ladite pièce comportant une première partie d'extrémité apte à coopérer avec l'un dit premier des bords longitudinaux du rail et une seconde partie d'extrémité dite de manœuvre apte à être manœuvrée par un utilisateur de manière à déplacer ledit verrou entre une première position dans laquelle ledit verrou réalise la fixation de l'appareil sur le rail en coopération avec une butée fixe appartenant à l'enveloppe coopérant avec le bord longitudinal du rail opposé au précédent, et une seconde position dans laquelle ladite première partie d'extrémité du verrou ne coopère plus avec le bord du rail de manière à permettre l'extraction de l'appareil dudit rail, ce dispositif de verrouillage comportant un dispositif de prolongation (P) de la partie de manœuvre (19) dudit au moins un verrou (7,8,9,32,33), ledit dispositif de prolongation (P) comportant une première partie d'extrémité (12) apte à être fixée sur la partie de manœuvre (19) dudit au moins un verrou, et une seconde partie d'extrémité (13) comportant des moyens de manœuvre (20) aptes à être actionnés par l'utilisateur afin d'actionner le ou les verrous, **caractérisé en ce que** l'appareil est un appareil de protection électrique tripolaire (D) comportant trois modules de coupure (1,2,3) ou un appareil de protection électrique tétrapolaire comportant quatre modules de coupure (22 à 25), lesdits modules étant accolés par leurs faces latérales et formant un ensemble monobloc, et **en ce que** le dispositif de verrouillage comporte deux verrous (8,9,32,33) associés respectivement aux deux modules de coupure (1,3) situés à l'extrémité dudit ensemble dans le cas de l'appareil tripolaire ou associés respectivement à deux des modules de coupure (23,25) séparés par un module de coupure ne comportant pas de verrou dans le cas de l'appareil tétra polaire, ledit dispositif de prolongation comportant deux branches (12a,12b) dites premières de fixation comportant des moyens d'accrochage (16) respectivement sur les deux parties de manœuvre des deux verrous précités (8,9,32,33) et une branche dite seconde (12c) située entre les deux premières branches et comportant des moyens de guidage (14,15) aptes à coopérer à coulissement avec l'enveloppe du module situé entre les deux modules précités associés à un verrou, lesdites branches dites premières et secondes faisant partie d'une même pièce (10) du dispositif de prolongation (P).

2. Ensemble d'appareils électriques modulaires selon la revendication 1, **caractérisé en ce que** les branches de fixation (12a, 12b) s'étendent sur une longueur correspondant sensiblement à la moitié de la longueur des branches de guidage (12c).

3. 4. Ensemble d'appareils électriques modulaires selon l'une quelconque des revendications 1 à 2, **caractérisé en ce que** la branche de guidage (12c) comporte des moyens de retenue élastiques (26) aptes à coopérer avec l'enveloppe de l'appareil de manière à retenir la branche de guidage (12c) à l'intérieur de l'enveloppe.

4. Ensemble d'appareils électriques modulaires selon la revendication 1 ou 2, **caractérisé en ce que** les moyens d'accrochage sur les verrous précités comportent des moyens pour réaliser un accrochage élastique sur ces verrous.

5. Ensemble d'appareils électriques modulaires selon la revendication 1 ou 2, **caractérisé en ce que** les moyens d'accrochage précités (16) comportent des moyens d'accrochage coopérant avec une ouverture (17) de manœuvre prévue dans la partie de manœuvre (19) des verrous (7, 8, 9).

6. Ensemble d'appareils électriques modulaires selon l'une quelconque des revendications 1 à 5, lesdits appareils étant destinés à être montés sur un rail de montage en étant accolés par leurs faces latérales, ledit ensemble comportant au moins un appareil de coupure (D, E) associé à un bloc différentiel (B) ou un module de télécommande, ledit bloc différentiel ou module de télécommande comportant un support (6) destiné à loger les conducteurs de liaison entre l'appareil de coupure (D, E) et le bloc différentiel (B) ou module de télécommande, ledit support (6) étant situé en regard des bornes de sortie (5) des appareils de coupure, **caractérisé en ce que** la partie de manœuvre du dispositif de verrouillage fait saillie de la face d'extrémité principale du support (6) située du côté des verrous, de manière à pouvoir être manœuvré par un utilisateur à partir de la face avant des appareils.

## Patentansprüche

1. Anordnung von modularen elektrischen Geräten, die dazu bestimmt sind, auf einer Montageschiene angebracht zu werden, die für wenigstens eines der Geräte eine Verriegelungsvorrichtung aufweist, wobei diese Vorrichtung wenigstens einen Riegel aufweist, der ein bewegliches Teil aufweist, das in der Lage ist, in Bezug auf die Hülle des Gerätes zu gleiten, wobei das Teil einen ersten Endteil aufweist, der in der Lage ist, mit einem der Längsränder der Schiene, erster Längsrand genannt, zusammenzuwirken, und einen zweiten Endteil, Betätigungsendteil genannt, der durch einen Benutzer betätigbar ist, um so den Riegel zu verlagern zwischen einer ersten Position, in welcher der Riegel die Befestigung des Gerätes auf der Schiene im Zusammenwirken mit einem zur Hülle gehörenden festen Anschlag bewirkt, der mit dem zum vorhergehenden entgegengesetzten Längsrand der Schiene zusammenwirkt, und einer zweiten Position, in welcher der erste Endteil des Riegels nicht mehr mit dem Rand der Schiene zusammenwirkt, um so das Abziehen des Gerätes von der Schiene zu ermöglichen, wobei diese Verriegelungsvorrichtung eine Vorrichtung zur Verlängerung (P) des Betätigungsteils (19) des wenigstens einen Riegels (7, 8, 9, 32, 33) aufweist, wobei diese Verlängerungsvorrichtung (P) einen ersten Endteil (12) aufweist, der an dem Betätigungsteil (19) des wenigstens einen Riegels befestigbar ist, und einen zweiten Endteil (13), der Betätigungsmittel (20) aufweist, die durch den Benutzer betätigbar sind, um den oder die Riegel zu betätigen, **dadurch gekennzeichnet, dass** das Gerät ein dreipoliges elektrisches Schutzgerät (D) ist, das drei Unterbrechungsmodule (1, 2, 3) aufweist, oder ein vierpoliges elektrisches Schutzgerät, das vier Unterbrechungsmodule (22 bis 25) aufweist, wobei die Module an ihren seitlichen Flächen aneinandergefügt sind und eine einstückige Anordnung bilden, und dadurch, dass die Verriegelungsvorrichtung zwei Riegel (8, 9, 32, 33) aufweist, die im Fall des dreipoligen Gerätes jeweils einem der zwei am Ende der Anordnung befindlichen Unterbrechungsmodule (1, 3) zugeordnet sind oder im Fall des vierpoligen Gerätes jeweils einem von zwei der Unterbrechungsmodule (23, 25) zugeordnet sind, die durch ein keinen Riegel aufweisendes Unterbrechungsmodul getrennt sind, wobei die Verlängerungsvorrichtung zwei Schenkel (12a, 12b) aufweist, erste Befestigungsschenkel genannt, welche Mittel zum Einhaken (16) jeweils an einem der zwei Betätigungsteile der zwei oben genannten Riegel (8, 9, 32, 33) aufweisen, und einen sogenannten zweiten Schenkel (12c), der sich zwischen den zwei ersten Schenkeln befindet und Führungsmittel (14, 15) aufweist, die in der Lage sind, mit der Hülle des Moduls gleitend zusammenzuwirken, das sich zwischen den zwei oben genannten, einem Riegel zugeordneten Modulen befindet, wobei die sogenannten ersten und zweiten Schenkel Bestandteile ein und desselben Teils (10) der Verlängerungsvorrichtung (P) sind.

2. Anordnung von modularen elektrischen Geräten nach Anspruch 1, **dadurch gekennzeichnet, dass** sich die Befestigungsschenkel (12a, 12b) über eine Länge erstrecken, die im Wesentlichen der Hälfte der Länge der Führungsschenkel (12c) entspricht.

3. Anordnung von modularen elektrischen Geräten nach einem der Ansprüche 1 bis 2, **dadurch gekennzeichnet, dass** der Führungsschenkel (12c) elastische Haltemittel (26) aufweist, die in der Lage sind, mit der Hülle des Gerätes so zusammenzuwirken, dass sie den Führungsschenkel (12c) im Inneren der Hülle halten.

4. Anordnung von modularen elektrischen Geräten nach Anspruch 1 oder 2, **dadurch gekennzeichnet, dass** die oben genannten Mittel zum Einhaken an den Riegeln Mittel zum Bewirken eines elastischen Einhakens an diesen Riegeln aufweisen.

5. Anordnung von modularen elektrischen Geräten nach Anspruch 1 oder 2, **dadurch gekennzeichnet, dass** die oben genannten Mittel zum Einhaken (16) Mittel zum Einhaken aufweisen, die mit einer Betätigungsöffnung (17) zusammenwirken, die im Betätigungsteil (19) der Riegel (7, 8, 9) vorgesehen ist.

6. Anordnung von modularen elektrischen Geräten nach einem der Ansprüche 1 bis 5, wobei die Geräte dazu bestimmt sind, auf einer Montageschiene angebracht zu werden, indem sie an ihren seitlichen Flächen aneinandergefügt werden, wobei die Anordnung wenigstens ein Unterbrechungsgerät (D, E) aufweist, das einem Differentialblock (B) oder einem Fernsteuermodul zugeordnet ist, wobei der Differentialblock oder das Fernsteuermodul einen Träger (6) aufweist, der dazu bestimmt ist, die Verbindungsleitungen zwischen dem Unterbrechungsgerät (D, E) und dem Differentialblock (B) oder Fernsteuermodul aufzunehmen, wobei sich der Träger (6) gegenüber den Ausgangsklemmen (5) der Unterbrechungsgeräte befindet, **dadurch gekennzeichnet, dass** der Betätigungsteil der Verriegelungsvorrichtung von der auf der Seite der Riegel befindlichen Hauptendfläche des Trägers (6) vorsteht, so dass er von der Vorderseite der Geräte aus von einem Benutzer betätigt werden kann.

## Claims

1. Assembly of modular electrical units intended to be mounted on a mounting rail comprising, for at least one of the units, a locking device, said device comprising at least one catch comprising a mobile part able to slide with respect to the casing of the unit, said part comprising a first end portion able to collaborate with one, referred to as the first, of the longitudinal edges of the rail and a second end portion, referred to as the manipulation end portion, able to be manipulated by a user so as to move said catch between a first position in which said catch fixes the unit to the rail in collaboration with a fixed end stop belonging to the casing collaborating with the opposite longitudinal edge to the previous one, and a second position in which said first end portion of the catch no longer collaborates with the edge of the rail so as to allow the unit to be extracted from said rail, this locking device comprising an extension device (P) extending the manipulation portion (19) of said at least one catch (7, 8, 9, 32, 33), said extension device (P) comprising a first end portion (12) able to be fixed to the manipulation portion (19) of said at least one catch, and a second end portion (13) comprising manipulation means (20) able to be actuated by the user so as to operate the catch or catches, **characterized in that** the unit is a three-pole electrical protection unit (D) comprising three switching modules (1, 2, 3) or a four-pole electrical protection unit comprising four switching modules (22 to 25), said modules being contiguous via their lateral faces and forming a single-piece assembly, and **in that** the locking device comprises two catches (8, 9, 32, 33) associated respectively with the two switching modules (1, 3) situated at the end of said assembly in the case of the three-pole unit or associated respectively with two of the switching modules (23, 25) which are separated by a switching module that does not have a catch in the case of the four-pole unit, said extension device comprising two branches (12a, 12b), referred to as first fixing branches, comprising catching means (16) for catching respectively on the two manipulation portions of the aforementioned two catches (8, 9, 32, 33) and a branch, referred to as second branch (12c), situated between the two first branches and comprising guide means (14, 15) able to collaborate in sliding with the casing of the module situated between the aforementioned two modules associated with a catch, said so-called first and second branches forming portions of the one same part (10) of the extension device (P).

2. Assembly of modular electrical units according to Claim 1, **characterized in that** the fixing branches (12a, 12b) extend over a length corresponding substantially to half the length of the guide branches (12c).

3. Assembly of modular electrical units according to either one of Claims 1 and 2, **characterized in that** the guide branch (12c) comprises elastic retention means (26) able to collaborate with the casing of the unit so as to retain the guide branch (12c) inside the casing.

4. Assembly of modular electrical units according to Claim 1 or 2, **characterized in that** the aforementioned means for catching on the catches comprise means for catching elastically on these catches.

5. Assembly of modular electrical units according to Claim 1 or 2, **characterized in that** the aforementioned catching means (16) comprise catching means that collaborate with a manipulation opening (17) provided in the manipulation part (19) of the catches (7, 8, 9).

6. Assembly of modular electrical units according to any one of Claims 1 to 5, said units being intended to be mounted on a mounting rail by being contiguous via their lateral faces, said assembly comprising at least one switching unit (D, E) associated with a differential block (B) or a remote control module, said differential block or remote control module comprising a support (6) intended to house the conductors that connect together the switching unit (D, E) and the differential block (B) or remote control module, said support (6) being situated facing the output terminals (5) of the switching units, **characterized in that** the manipulation part of the locking device projects from the main end face of the support (6), which face is situated on the side of the catches, so that it can be manipulated by a user from the front face of the units.
